# FASCICULE DE BREVET EUROPEEN

(11) **EP 1 122 224 B1**
(45) Date de publication et mention de la délivrance du brevet: **18.08.2004**
(21) Numéro de dépôt: 01400227.3
(22) Date de dépôt: 30.01.2001
(51) Int. Cl.: C04B 35/109, C04B 35/484

(54) **Produits électrofondus à base d'alumine-zircone-silice à microstructure améliorée**
Schmelzgegossene Aluminiumoxid-Zirkonoxid-Siliziumoxid Produkte mit verbesserter Mikrostruktur
Fused cast alumina-zirconia-silica based products with an improved microstructure

(30) Priorité: 31.01.2000 FR 0001192
(43) Date de publication de la demande: 08.08.2001
(73) Titulaire: SOCIETE EUROPEENNE DES PRODUITS REFRACTAIRES, F-92400 Courbevoie (FR)
(72) Inventeur: Gaubil, Michel Marc, 84000 Avignon (FR); Boussant-Roux, Yves Marcel Léon, 84140 Montfavet (FR); Sertain, Emmanuel Jean-Marie, 75014 Paris (FR); Zanoli, Alain Paul Bernard, 84000 Avignon (FR)
(74) Mandataire: Colas, Jean-Pierre

(56) Documents cités:
- EP-A- 0 235 909
- EP-A- 0 939 065
- FR-A- 2 363 535
- US-A- 2 438 552

## Description

L'invention concerne des produits électrofondus AZS (Alumine-Zircone-Silice) présentant des caractéristiques améliorées pour une utilisation en four de fusion du verre. Plus particulièrement, l'invention concerne des produits AZS oxydés caractérisés par une structure cristalline homogène et présentant des cristaux de zircone dendritique allongés dans la zone utile des pièces. La présence simultanée de ces caractéristiques permet à ces produits d'offrir une résistance améliorée à la corrosion par le verre fondu.

Les produits coulés-moulés sont obtenus par fusion d'un mélange de matières premières appropriées dans un four à arc électrique (produits appelés aussi "électrofondus") ou tout autre technique de fusion adaptée à ces produits. Le liquide fondu est ensuite coulé dans un moule permettant d'obtenir directement des pièces de forme. En général, le produit est ensuite soumis à un programme thermique contrôlé de refroidissement pour être amené à la température ambiante sans fracturation. Cette opération est appelée "recuisson" par l'homme de l'art.

Les produits AZS sont connus depuis plusieurs dizaines d'années et ont succédé aux produits à base uniquement d'alumine et de silice. US-A- 2 271 366 et US-A-2 438 552 décrivent les premiers perfectionnements à ces produits AZS. Depuis les enseignements de FR-A-1 208 577, les produits AZS sont élaborés en conditions oxydantes. En effet, les produits de la première génération avaient tendance à libérer des bulles gazeuses dans le verre fondu ce qui entraînait des défauts rédhibitoires dans le verre. Le passage à des conditions d'élaboration oxydantes a permis d'améliorer la résistance des produits AZS et la qualité du verre. Les produits oxydés ont en général une couleur blanc jaune à blanc-orangé alors que les produits réduits ont une teinte blanc à blanc-gris.

Les produits réfractaires AZS sont constitués de différentes phases : les cristaux d'alumine-alpha (ou corindon), les cristaux de zircone et une phase vitreuse. Le corindon et la zircone sont partiellement associés dans des cristaux d'eutectique.

Concernant la nature et la forme des cristaux, l'art antérieur donne des enseignements parfois contradictoires. US-A-2 079 101 indique qu'il est préférable d'avoir une structure cristalline très orientée où les cristaux sont parallèles entre eux perpendiculairement aux faces du bloc coulé. FR-A- 1 153 488 décrit des produits AZS avec un arrangement cristallin enchevêtré avantageux pour améliorer la résistance à la corrosion. Ces produits sont de la première génération c'est-à-dire des produits réduits. Cependant, les inventeurs de FR-A-1 153 488 n'ont mis leur invention en évidence que sur une forme de bloc très particulière et les analyses de microstructure ne concernent qu'une petite zone du bloc. Les inventeurs indiquent que c'est la composition chimique du produit qui permet d'obtenir les microstructures souhaitées. En particulier, ils précisent que la structure cristalline de leur invention ne se rencontre que dans une petite zone du système Al₂O₃-ZrO₂-SiO₂ pour laquelle la teneur en silice est comprise entre 16 et 20%. Il est par ailleurs indiqué que la présence d'une trop forte proportion d'oxyde de sodium a une influence néfaste sur la résistance à la corrosion et qu'il faut limiter le rapport Na₂O/SiO₂ à 0,14. US-A-4 7911 077 et US-A-5 171 491 indiquent, de leur côté, qu'il y a une différence de structure entre la peau et le coeur des pièces. Ils enseignent par ailleurs qu'une structure à cristaux allongés et enchevêtrés est défavorable et proposent une solution pour l'obtention de pièces à microstructure fine et uniforme exempte de cristaux de zircone dendritique.

Les produits commercialisés actuellement, tels que l'ER-1681, l'ER-1685 ou l'ER-1711 de la Demanderesse, sont des produits oxydés et qui contiennent respectivement 32, 36 et 40% en poids de zircone en moyenne.

Dans ces produits on trouve de la zircone dite libre ou primaire (non incluse dans les cristaux d'eutectique). Ces cristaux de zircone libre sont de petite taille et ont tendance à prendre une forme sphérique ou nodulaire. On rencontre également des cristaux d'eutectique corindon-zircone. Ceux-ci présentent une morphologie relativement isotrope. Par ailleurs on constate souvent la présence de cristaux de corindon libre dans les produits commercialisés actuellement.

Les réfractaires AZS sont largement utilisés dans les fours de verrerie, dans les zones en contact avec le verre fondu. Certaines nouvelles compositions de verre sont plus agressives vis-à-vis des matériaux constituant le four. D'autre part, les verriers recherchent des durées de campagne (durée de vie des réfractaires) beaucoup plus longues. Il existe donc toujours un besoin pour des matériaux réfractaires plus résistants à la corrosion par le verre fondu. La zone la plus sensible se trouve au niveau de la ligne de flottaison. En effet, la durée de vie du four est souvent fonction de l'usure des matériaux au niveau de la ligne de flottaison. Par ailleurs, les évolutions de conception des fours de verrerie ont conduit à une augmentation des sollicitations imposées à la sole des fours. Une isolation plus importante de la sole pour limiter la consommation du four, l'utilisation de bouillonneurs ou encore le nombre grandissant d'électrodes traversant la sole ont entraîné une augmentation de la température de la sole au contact du verre fondu ce qui accentue les problèmes de corrosion. Il existe donc un besoin pour des produits présentant une résistance à la corrosion améliorée. Il est bien connu que l'introduction de plus fortes quantités de zircone permet d'améliorer la résistance à la corrosion. Cependant l'augmentation de la teneur en zircone s'accompagne d'une augmentation de coût. Cela entraîne également une plus importante ségrégation dans le produit ce qui peut conduire à une moindre faisabilité industrielle. D'autre part, la hausse du taux de zircone donne lieu à une diminution de la conductivité thermique ce qui est défavorable pour la vitesse de corrosion industrielle. En effet, la vitesse de corrosion du matériau est fonction de la température d'interface verre/réfractaire qui est elle-même liée à la conductivité thermique du matériau réfractaire. Plus le produit réfractaire sera isolant et plus sa température d'interface sera élevée donc sa vitesse de corrosion rapide.

Il existe donc un besoin pour un réfractaire AZS présentant une résistance à la corrosion améliorée sans augmentation significative du taux de zircone.

L'invention a pour but de satisfaire ce besoin.

Après des études approfondies on a trouvé que l'on pouvait obtenir un matériau réfractaire AZS oxydé plus résistant à la corrosion tout en conservant l'analyse chimique typiquement rencontrée actuellement, ce matériau se caractérisant par une nouvelle microstructure améliorée dans la zone utile.

Plus particulièrement, l'invention concerne des matériaux réfractaires du type alumine-zircone-silice (AZS) oxydés dont la composition est, en pourcentages massiques, 40 à 55% d'Al₂O₃, 32 à 45% de ZrO₂, 10 à moins de 16% de SiO₂ et 1 à 3% d'un oxyde de métal alcalin choisi parmi Na₂O, K₂O et leurs mélanges, ayant une microstructure comprenant essentiellement des cristaux d'alumine-alpha, des cristaux de zircone libre, des cristaux d'eutectique et une phase vitreuse intercristalline, caractérisés en ce que, au moins dans la zone utile des pièces, plus de 20% en nombre des cristaux de zircone libre ont une morphologie dendritique, ces cristaux étant enchevêtrés entre eux et avec des cristaux d'eutectique et en ce que au moins 40% en nombre des cristaux de zircone libre dendritique ont une dimension supérieure à 300 µm.

De préférence, sur une surface de 64 mm² de zone utile du matériau, on compte au moins 200 cristaux de zircone libre dendritique ayant une dimension supérieure à 300 µm.

De préférence également, les matériaux contiennent, en pourcentages massiques, 45 à 50% d'Al₂O₃, 34 à 38% de ZrO₂, 12 à 15% de SiO₂ et 1 à 3% d'un oxyde de métal alcalin choisi parmi Na₂O, K₂O et leurs mélanges.

De préférence l'oxyde de métal alcalin est Na₂O, pour des raisons de coût.

De préférence, encore, plus de 20% des cristaux de zircone libre dendritique ont une longueur supérieure à 500 µm.

De préférence, enfin, sur une surface de 64 mm² de zone utile du matériau, on compte au moins 100 cristaux de zircone libre dendritique ayant une dimension supérieure à 500 µm.

De manière surprenante, on a mis en évidence la possibilité d'obtenir, de façon reproductible et homogène dans la zone utile, pour un domaine donné de composition chimique et en élaboration oxydante, des microstructures permettant d'améliorer la résistance à la corrosion. Les études qui ont été menées montrent, en outre, que lorsque la microstructure des matériaux AZS contient des cristaux de zircone libre dont au moins 20% en nombre ont une morphologie dendritique et dont au moins 40% en nombre de ceux-ci ont une dimension supérieure à 300 *µ*m, on améliore la résistance à la corrosion de plus de 15% par rapport à des matériaux équivalents ne satisfaisant pas cette condition. En deçà de ces seuils et en particulier en deçà de la valeur minimale de 300 *µ*m on n'observe pas d'augmentation significative de la résistance à la corrosion et cela même lorsque le nombre total de cristaux de zircone libre est important.

On a pu remarquer que, pour les produits de l'invention, la quasi totalité (au moins 80%) des cristaux de zircone libre de longueur supérieure à 300 *µ*m sont des cristaux de zircone libre dendritique.

On a retenu 300 µm comme étant une limite critique pour la longueur des cristaux de zircone libre dendritique. En effet, l'analyse des microstructures d'un produit AZS classique utilisé comme produit de référence a montré que la longueur moyenne des cristaux de zircone libre est inférieure à 100 µm et que les plus longs cristaux atteignent 250 µm. La présence de cristaux allongés de longueur supérieure à 300 *µ*m est donc le signe d'un renforcement. Ce renforcement est significatif lorsque plus de 40% en nombre des cristaux de zircone libre dendritique remplissent ce critère de longueur minimum.

Pour comprendre le rôle de ces cristaux sur le mécanisme de corrosion des produits AZS, il est nécessaire de revenir sur les différentes étapes du processus de dissolution du matériau au contact du verre fondu. Le phénomène commence par la pénétration dans la phase vitreuse du matériau des éléments alcalins agressifs du verre fondu. Puis, il se produit un début de dissolution de l'alumine de l'eutectique dans la phase vitreuse, en arrière de l'interface verre réfractaire. Il se crée finalement une couche d'interface riche en alumine dans laquelle on trouve le squelette de zircone du matériau. Cette couche d'interface est très importante car elle joue un rôle protecteur du matériau. Le renouvellement de cette interface du fait de la convection du verre fondu est un facteur aggravant pour la corrosion du matériau réfractaire. Ainsi, nous considérons que la présence de cristaux de zircone de taille suffisante (supérieure à la dimension de l'interface) et leur enchevêtrement permettent de constituer un armaturage de la couche d'interface limitant ainsi son renouvellement. Ce moindre renouvellement permet de ralentir le processus de corrosion des matériaux réfractaires AZS. L'enchevêtrement des cristaux qui joue un rôle important n'est possible que si les cristaux considérés ont une forme suffisamment allongée. Ainsi, on ne prend en compte que les cristaux de zircone libre dendritique.

Les limites données pour les teneurs en Al₂O₃, ZrO₂ et SiO₂ englobent les compositions des matériaux actuels, classiques du commerce. La présence de silice est nécessaire pour garantir la faisabilité industrielle, mais doit être maintenue à un taux inférieur à 16% car au-delà de cette valeur, il se produit, en service, une pénétration massive des éléments agressifs du verre et une décohésion du matériau sous l'effet de forts courants de convection rencontrés dans les zones de plus forte usure des fours modernes de fusion du verre.

Par ailleurs, la teneur totale en oxyde de sodium et/ou oxyde de potassium ne doit pas être inférieure à 1% pour éviter la formation de mullite et ainsi favoriser la formation d'une phase vitreuse intercristalline riche en silice. Cette phase amorphe permet, grâce à sa plasticité, d'accommoder sur une large gamme de températures les contraintes mécaniques liées au refroidissement du matériau sous gradient thermique ainsi que le changement de volume lié à la transformation allotropique de la zircone. Dans ces conditions, la faisabilité industrielle des pièces est assurée. Par contre, la teneur totale en oxyde de sodium et/ou oxyde de potassium ne doit pas dépasser 3% pour éviter l'apparition de problèmes d'exsudation et de diminution de résistance à la corrosion.

La description qui va suivre, faite en se référant au graphique et microphotographies annexés, fera bien comprendre l'invention et les avantages apportés par les nouveaux produits. Les exemples sont donnés dans le but d'illustrer l'invention et ne sont pas limitatifs.
La figure 1 est une vue schématique d'un bloc situant les différents faces et dimensions dont il est question dans la description ci-dessous.
La figure 2 est un graphique de l'indice de résistance à la corrosion en fonction du pourcentage de zircone ;
Les figures 3 et 4 sont des microphotographies montrant la phase de zircone libre pour différents produits ; et
La figure 5 est constituée de deux microphotographies montrant la phase d'eutectique pour deux produits.

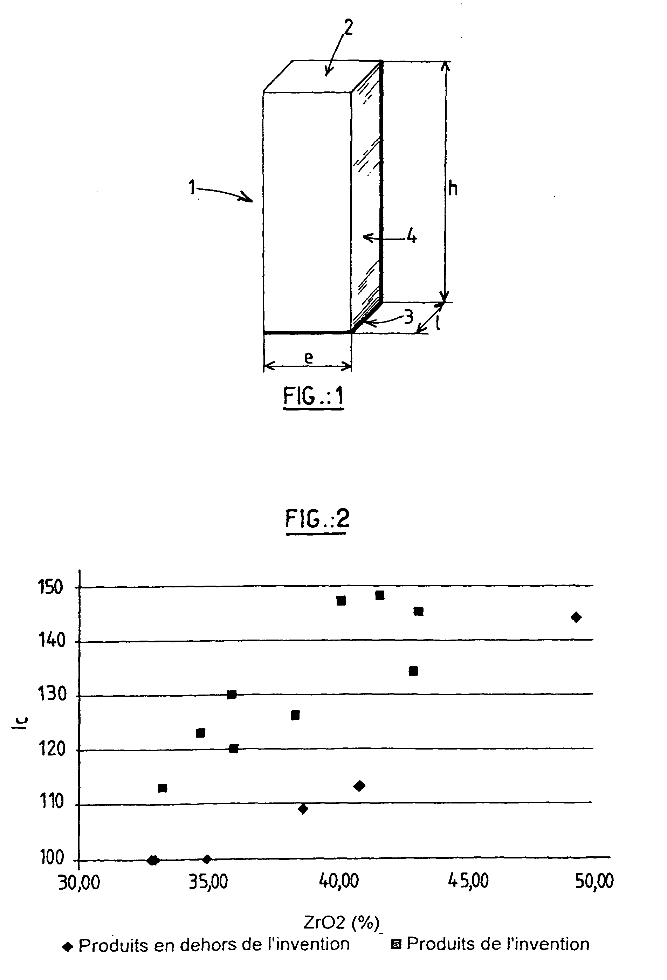

Sur la figure 1 est représenté un bloc réfractaire 1 de hauteur h, de largeur l et d'épaisseur e. Ce bloc présente une face de coulée 2, un fond 3 et une face 4 devant être au contact du verre fondu.

Pour les besoins de l'étude, on a fabriqué plusieurs blocs et dalles selon le procédé de fusion décrit dans le brevet français No. 1 208 577. On a utilisé un four de fusion à arc électrique de type Héroult comportant deux électrodes et dont la cuve a un diamètre d'environ 1 m et peut contenir environ 200 Kg de liquide.

Les produits classiques, de référence, ont été élaborés avec une tension de 250 à 300 Volts, une intensité de 1300 à 1400 Ampères et une énergie fournie de 2000 à 2500 kW par tonne.

Les produits de l'invention ont été élaborés avec une tension de 250 à 300 Volts, une intensité de 1500 à 1600 Ampères et une énergie fournie supérieure à 3000 kW par tonne.

Il est bien connu de l'homme de l'art que ces paramètres définissent parfaitement les conditions d'élaboration.

Les matières premières utilisées sont des produits de pureté supérieure à 98% ; en particulier, on a utilisé du sable de zircon, de l'alumine, du carbonate de sodium et de la zircone CC10 commercialisée par la Demanderesse.

Pour étudier le comportement des différentes pièces fabriquées, on a utilisé les différents tests et mesures décrits ci-après.

Pour caractériser chaque pièce, on prélève un échantillon. L'échantillon doit être représentatif de la zone utile. Par "zone utile", on entend la zone la plus sollicitée pour laquelle un renforcement de la résistance à la corrosion est attendu. Elle peut être définie en fonction de l'utilisation des pièces. A titre d'exemple, pour une dalle (épaisseur inférieure à 150 mm), située en fond de cuve au contact du verre fondu, la zone utile est la totalité de la dalle à condition que la hauteur soit inférieure ou égale à la largeur de la dalle. Pour un bloc palissade la zone utile correspond à la partie du bloc située au niveau de la ligne de flottaison. En pratique, on considère que cette zone utile est tout le volume pour lequel la hauteur est inférieure à 200 mm à partir du fond de bloc. En effet, la ligne de flottaison se situe typiquement à 100 mm du fond de bloc. Les échantillons étudiés (analyse chimique, microstructure et test de corrosion), pour être représentatifs, ont donc été prélevés en fond pour les dalles et à 100 mm du fond pour les blocs palissade, c'est-à-dire au niveau de la ligne de flottaison en conditions d'utilisation industrielle, ou en fond du bloc. Le prélèvement s'effectue perpendiculairement au fond, le fond étant la face opposée à la face de coulée.

Il est tout d'abord important de définir le niveau d'oxydation des produits étudiés. Ce dernier peut être déterminé au travers d'un test dit d'exsudation. Ce test est effectué sur une pastille du produit prélevée parallèlement à la face de fond du bloc ou de la dalle. Pour être valide, l'essai doit être réalisé sur une pastille dont la porosité est inférieure à 3%. La pastille est portée à 1600°C pendant 15 heures. La mesure du volume de la pastille avant et après l'essai permet de déterminer le volume de la phase vitreuse exsudée par le matériau. Ce volume dépend du niveau d'oxydation du matériau. En effet, une oxydation insuffisante se traduit par la présence d'une quantité importante de gaz dissous dans la phase vitreuse, par une moindre viscosité de la phase vitreuse et par une sous-oxydation des impuretés (fer par exemple) qui se retrouvent alors sous forme de nodules métalliques dans la phase vitreuse. Lors du chauffage et/ou de la mise en contact avec le verre pendant le test, on observe un phénomène d'ex-solution des gaz dissous dans la phase vitreuse et d'autre part des réaction d'oxydation des impuretés présentes dans la phase vitreuse. Ces phénomènes ainsi que la plus faible viscosité de la phase vitreuse favorisent l'expulsion de cette phase vitreuse. Ainsi, le niveau d'oxydation des matériaux est lié au taux d'exsudation. Si l'accroissement de volume est inférieur à 3%, le produit est dit oxydé. Tous les produits donnés en exemple (ceux de l'invention comme ceux de référence) sont des produits oxydés.

L'essai de corrosion utilisé est l'essai statique dit du "Petit Four Tournant" décrit par Messieurs J. RECASENS, A. SEVIN et M. GARDIOL lors du 8ème Congrès International du verre tenu à Londres du 1er au 6 Juillet 1968. Douze échantillons sont coupés en forme de claveaux (hauteur 100 mm, épaisseur moyenne 45 mm) pour constituer le mur d'un petit bassin circulaire. La cuve ainsi constituée contient du verre fondu et est maintenue en rotation. L'essai a été mené avec du verre sodocalcique à 1550°C pendant 3 semaines. La mesure de la profondeur d'attaque effectuée au niveau du verre permet d'attribuer un indice de résistance à la corrosion.

L'analyse et la caractérisation des microstructures des produits AZS a été effectuée à l'aide d'une microsonde électronique de type JXA-8800 R/RL (JEOL) couplée avec un logiciel d'analyse d'images. La microsonde permet l'acquisition d'images numériques avec différents niveaux de gris correspondant à la concentration des différents éléments : Al, Zr, Si.... Le logiciel d'analyse d'image permet d'en déduire les différentes phases en présence et leur pourcentage respectif ; la mesure est donnée avec un écart-type inférieur à 0,5%. La zircone libre apparaît comme la phase ayant une forte influence sur la résistance à la corrosion en fonction de l'aspect des cristaux qui la constituent. En effet, on peut distinguer deux morphologies très différentes pour les cristaux de zircone libre. Dans la morphologie de type dendritique le cristal de zircone libre apparaît comme long et effilé. Une dimension du cristal est alors bien supérieure à l'autre. En particulier, on considère que le facteur de forme (L\I ou rapport entre la plus grande et la plus petite dimension du cristal) doit être supérieur à 5 pour avoir une morphologie dendritique. A l'opposé, dans une morphologie de type nodulaire ou non-dendritique, le cristal de zircone libre se présente sous forme de nodule, les différentes dimensions du cristal sont alors relativement proches. Il apparaît donc que la plus grande dimension du cristal de zircone libre est une caractéristique importante à étudier. Pour ce faire, le logiciel permet de reconnaître les cristaux de zircone libre et d'en déterminer différents paramètres (L, I, facteur de forme.....). On appellera cristaux de zircone libre dendritique les cristaux de zircone libre ayant un rapport L/I supérieur à 5. On appellera L la longueur du cristal de zircone libre.

Les principales caractéristiques des produits étudiés sont regroupées dans le tableau 1.

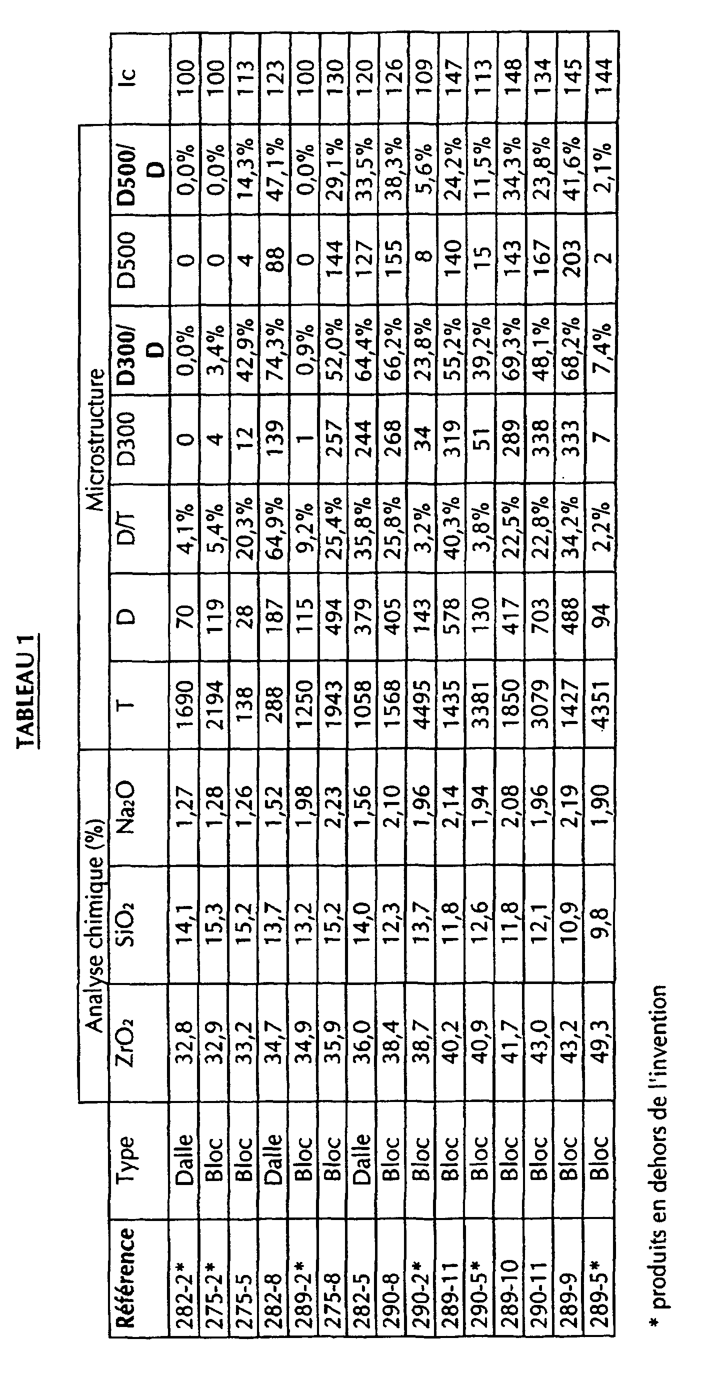

L'analyse chimique est déterminée par fluorescence des rayons X ; elle est donnée en pourcentage massique, le complément étant l'alumine. Ces analyses sont celles des échantillons prélevés comme indiqué ci-dessus. L'homme de l'art reconnaîtra qu'en fond de bloc, la proportion de zircone a tendance à être plus importante à cause du phénomène de ségrégation dans le bloc. Les caractéristiques de la microstructure sont évaluées en arrière de la zone de coup de sabre (niveau de la surface libre du verre) sur une surface de 64 mm².

On a considéré comme cristaux de zircone libre tous les cristaux de zircone dont la surface est supérieure à 640 µm². En effet, les cristaux de zircone de surface inférieure à 640 *µ*m² ne se rencontrent qu'en bordure des zones d'eutectique. Ils sont très peu nombreux et n'ont pas d'influence majeure. Les caractéristiques des microstructures données dans le tableau 1 ne concernent que les cristaux de zircone libre. T correspond au nombre total de cristaux de zircone libre comptabilisés sur la surface étudiée. D est le nombre total de cristaux de zircone libre dendritique ; pour ces cristaux on a donc L/I supérieur à 5. D300 correspond au nombre de cristaux de zircone libre dendritique ayant une longueur supérieure à 300 *µ*m. D500 est le nombre de cristaux de zircone libre dendritique ayant une longueur supérieure à 500 µm. Ic est l'indice de corrosion ; l'indice 100 est attribué au produit de référence, l'ER-1681 commercialisé par la Demanderesse.

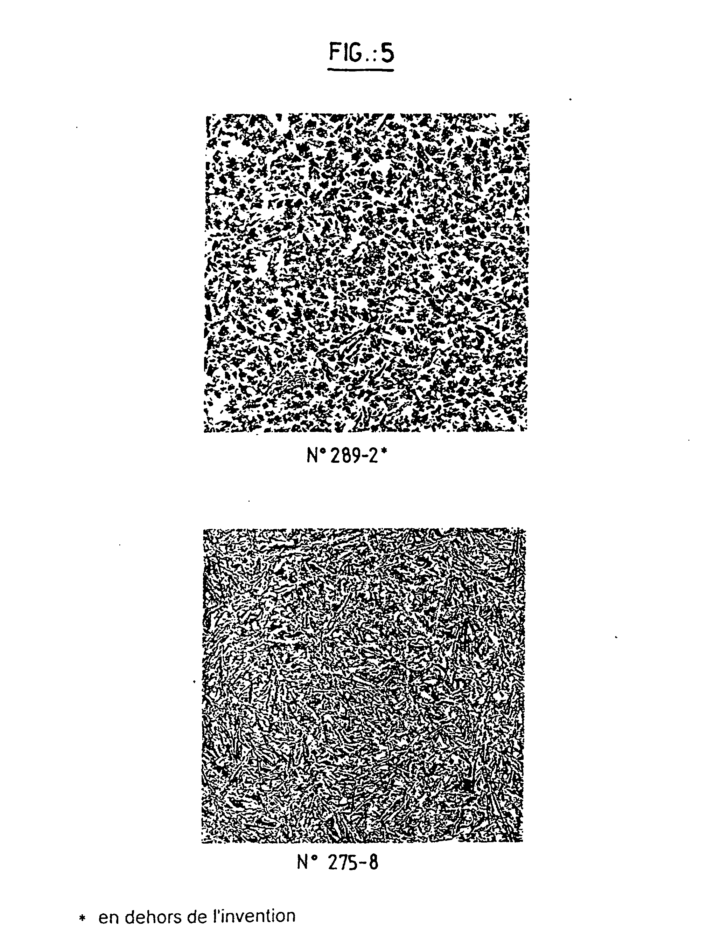

Les cristaux d'eutectique des matériaux de l'invention présentent des caractéristiques morphologiques différentes des produits de référence. L'observation des microphotographies de la figure 5 permet de constater que l'aspect des cristaux d'eutectique est proche de celui des cristaux de zircone libre. Généralement, une dimension de ces cristaux est très supérieure à l'autre, ce qui donne un aspect allongé.

Les valeurs des indices de résistance à la corrosion ainsi que le graphique de la figure 2 montrent bien la tendance générale d'amélioration de la résistance à la corrosion offerte par les matériaux de l'invention. Cette représentation met également en évidence la tendance logique d'amélioration de résistance à la corrosion lorsque la teneur en zircone augmente. Cependant, on observe que, pour des taux de zircone équivalents, les produits de l'invention permettent de gagner 15 à 30% sur l'indice de résistance à la corrosion. Ceci signifie également que, pour atteindre un niveau de résistance à la corrosion donné, on pourra utiliser des produits moins riches en zircone, donc moins coûteux.

Du point de vue de la microstructure, on observe que le nombre total de cristaux de zircone libre, en partie lié à la teneur en zircone du produit, n'est pas un bon indicateur pour évaluer la résistance à la corrosion. En effet, on peut remarquer que certains matériaux ont un nombre très important de cristaux de zircone libre sans que cela ne se traduise par une amélioration de la résistance à la corrosion. A l'inverse, certains matériaux de l'invention présentent un nombre total de cristaux de zircone libre relativement faible mais ont tout de même un indice de résistance à la corrosion significativement plus élevé que les produits standard équivalents.

En fait, sans vouloir lier l'invention à une quelconque théorie, on pense que c'est surtout la forme et en particulier la longueur des cristaux qui a une influence importante sur la performance des matériaux. Lorsque les cristaux sont de petite taille et de forme nodulaire ils ne contribuent pas au renforcement de la microstructure et on n'observe que l'effet de la teneur en zircone qui est connue pour particulièrement bien résister à la corrosion. Par contre, lorsque les cristaux ont une forme allongée et que leur longueur devient suffisamment importante, ils prennent un arrangement entremêlé entre eux et avec les cristaux d'eutectique ce qui renforce le matériau et permet ainsi d'améliorer la résistance à la corrosion du verre fondu.

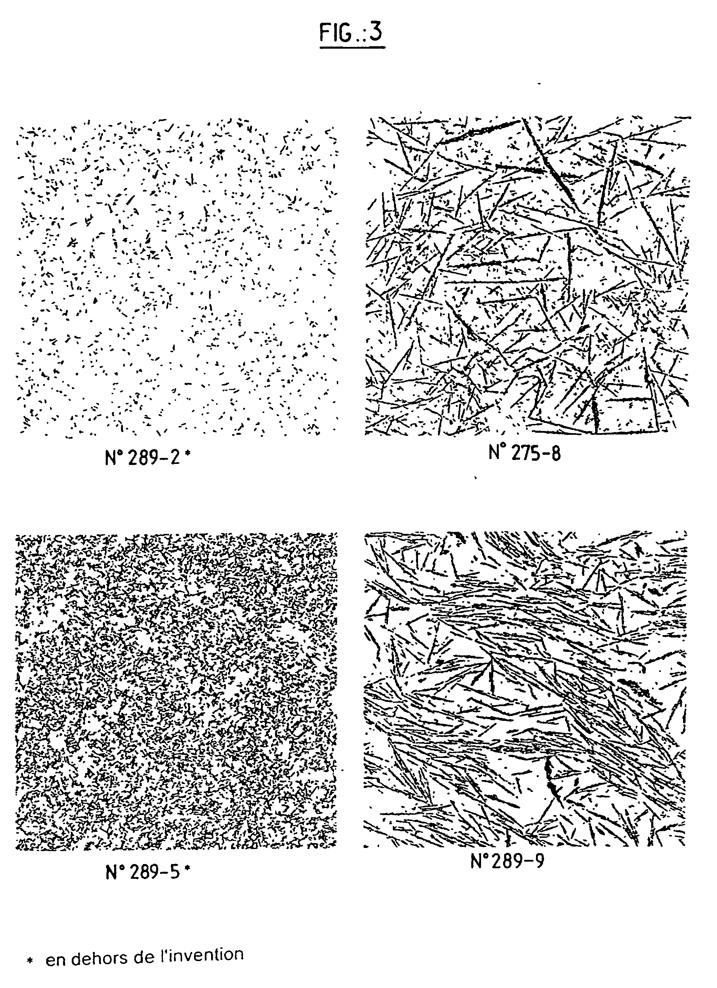

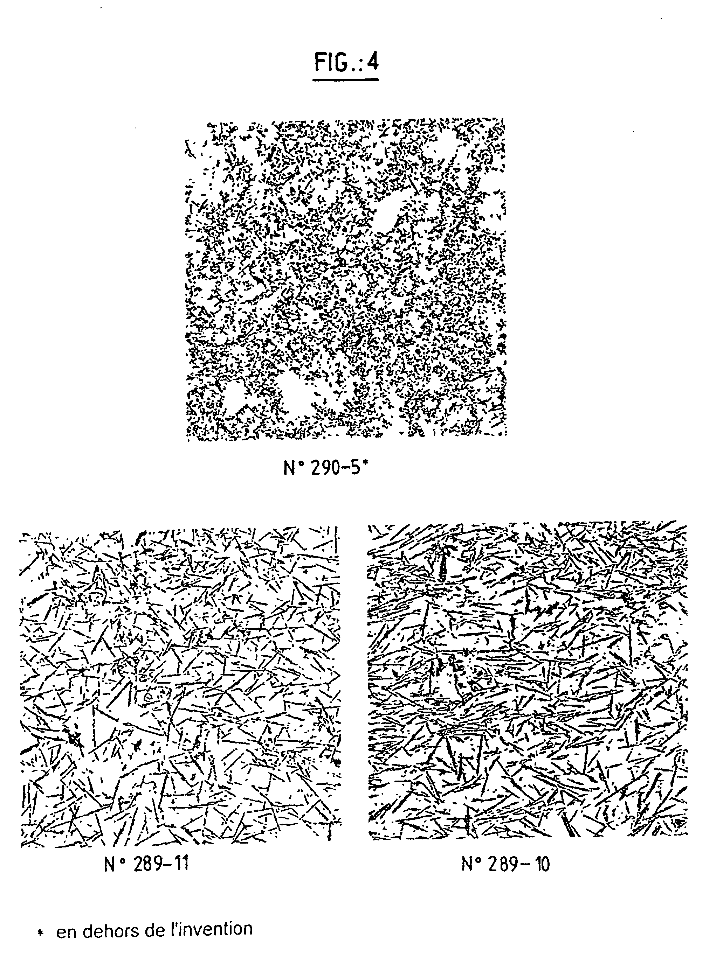

L'étude a montré que pour les matériaux classiques très peu de cristaux sont de forme allongée (cristaux de zircone libre dendritique) et la longueur moyenne des cristaux de zircone ne dépasse pas 100 à 200 µm. Même lorsque le taux de zircone dans le produit augmente, les cristaux de zircone libre dendritique de longueur supérieure à 300 µm ne représentent qu'une faible proportion. A l'inverse, dans les matériaux de l'invention on observe un nombre suffisant de cristaux allongés et assez longs pour qu'ils puissent s'enchevêtrer. Les figures 3 et 4 et la comparaison des microphotographies des produits 289-2* et 275-8 ou 290-5* et 289-11 et 289-10 ou bien 289-5* et 289-9 permet de bien illustrer ces différences de microstructures.

Pour observer une amélioration significative de la résistance à la corrosion sans augmentation du taux de zircone, on estime qu'il faut que le nombre de cristaux de zircone libre dendritique soit supérieur à 20% par rapport au nombre total de cristaux de zircone libre et que, parmi ces cristaux de zircone libre dendritique, au moins 40% aient une longueur supérieure à 300 µm.

Pour obtenir les matériaux de l'invention, il est nécessaire de respecter un certain nombre de critères relatifs aux étapes de fusion, coulée et recuisson.

En particulier, il est important de maintenir un niveau d'oxydation comparable aux produits de référence actuels. Ceci peut être obtenu en adoptant une marche électrique dite "en arc long" au cours de laquelle les contacts entre le liquide et les électrodes en graphite sont minimisés et de très courte durée.

D'autre part, il est important de favoriser la phase de croissance des cristaux de zircone. Pour obtenir ce résultat, il est nécessaire d'agir sur plusieurs paramètres.
A) Tout d'abord, le cycle d'élaboration doit permettre une fusion totale et parfaite des matières premières afin d'éviter la présence au sein du liquide de nombreuses particules solides favorisant la phase de germination, ce qui augmenterait le nombre de cristaux de zircone et limiterait, donc, leur croissance.
B) Par ailleurs, il faut favoriser la phase de croissance des cristaux de zircone. Pour ce faire, il est nécessaire d'éviter un refroidissement trop rapide du liquide lors de la coulée. Pour cela, la vitesse de coulée est maintenue à des valeurs très supérieures à ce qui se pratique classiquement.
C) Enfin, il est important d'accroître les gradients thermiques au sein du bloc ou de la dalle au cours des premiers instants de la solidification. Ceci peut être obtenu en augmentant le caractère trempant du moule (utilisation d'un moule refroidi par eau par exemple).

Il est important de remarquer que les conditions d'obtention des structures microcristallines des matériaux de l'invention sont plus difficiles à obtenir dans des conditions d'élaboration oxydantes que dans des conditions réductrices.

En effet, l'élaboration de produits réduits se fait soit par contact direct des électrodes avec le bain soit par création d'un arc très court entre les électrodes et le bain d'oxydes fondus. Ces conditions d'élaboration favorisent l'homogénéité du bain fondu (les mouvements de convection au voisinage des électrodes sont en effet importants) et on observe moins de particules solides. Par ailleurs, il est possible que les liquides réduits soient plus agressifs vis-à-vis de ces particules non dissoutes.

On a vérifié, par ailleurs, que les caractéristiques des microstructures des produits de l'invention sont bien similaires en différents points de la zone utile des pièces.

L'étude a été menée sur un bloc de l'invention ; des prélèvements ont été effectués en quatre points combinant deux hauteurs : 50 mm et 150 mm (soit une amplitude de 50 mm autour de la ligne de flottaison) et deux épaisseurs en profondeur dans le bloc : 30 et 70 mm. Nous avons comparé les paramètres des microstructures observées à ceux d'un échantillon prélevé au niveau de la ligne de flottaison (échantillon A).

Les résultats sont donnés dans le tableau 2 :

**TABLEAU 2**

| Echantillon | A | 50,30 | 50,70 | 150,30 | 150,70 |
|---|---|---|---|---|---|
| T | 1395 | 1305 | 1497 | 1067 | 1234 |
| D | 455 | 438 | 521 | 316 | 381 |
| D/T | 32,6% | 33,6% | 34,8% | 29,6% | 30,9% |
| D300 | 280 | 266 | 296 | 200 | 226 |
| D300/D | 61,5% | 60,7% | 56,8% | 63,3% | 59,3% |

Ces résultats montrent que les critères de microstructure des produits de l'invention sont remplis dans toute la zone utile des pièces étudiées.

Les matériaux de l'invention peuvent contenir, à titre optionnel, d'autres oxydes en plus des oxydes principaux susmentionnés.

Ainsi on a pu fabriquer, dans les conditions d'élaboration sus-décrites des produits de l'invention, une série de blocs contenant chacun l'un des oxydes optionnels suivants : B₂O₃ (à raison de 0,4 à 2,0%), BaO (à raison de 0,4 à 3,8%), Cr₂O₃ (à raison de 0,4 à 5,0%), Li₂O (à raison de 0,4 à 1,3%) et MgO (à raison de 0,4 à 1,0%), toutes les proportions étant en poids par rapport à la composition totale. Des mélanges de ces oxydes optionnels sont aussi possibles à condition que le total des oxydes optionnels n'excède pas 5% en poids.

L'observation qualitative de la microstructure des produits effectuée au microscope optique, permet de constater que ces oxydes optionnels n'empêchent pas l'obtention d'une microstructure contenant un nombre suffisant de cristaux de zircone dendritique de longueur supérieure à 300 µm.

Le Tableau 3 ci-après indique, à titre d'exemples, des analyses chimiques de matériaux selon l'invention comprenant du K₂O ou un des oxydes optionnels susmentionnés. La proportion (non indiquée) de Al₂O₃ correspond à la différence entre 100 % et la somme des constituants indiqués.

**TABLEAU 3**

| Référence | ZrO₂ | SiO₂ | Na₂O | K₂O | B₂O₃ | BaO | Cr₂0₃ | Li₂O | MgO |
|---|---|---|---|---|---|---|---|---|---|
| 6525-5 | 35,1 | 13,5 | 1,33 | 0,47 | | | | | |
| 6428-1 | 34,1 | 15,0 | 0,71 | 1,60 | | | | | |
| 6428-2 | 34,2 | 14,8 | 0,60 | 1,91 | | | | | |
| 6428-4 | 34,3 | 14,7 | 0,49 | 2,22 | | | | | |
| 6422-2 | 34,3 | 14,7 | 1,13 | | 0,54 | | | | |
| 6371-6 | 37,0 | 13,9 | 1,08 | | 1,80 | | | | |
| 6417-2 | 33,6 | 14,3 | 1,07 | | | 1,50 | | | |
| 6632-1 | 35,4 | 13,0 | 1,38 | | | 1,18 | | | |
| 6417-1 | 34,3 | 14,4 | 1,06 | | | 2,20 | | | |
| 6632-4 | 34,8 | 12,8 | 1,22 | | | 2,83 | | | |
| 6277-1 | 33,1 | 15,1 | 1,38 | | | | 1,35 | | |
| 6651-2 | 33,6 | 13,9 | 1,51 | | | | 2,58 | | |
| 6296-4 | 34,4 | 15,6 | 1,56 | | | | 5 | | |
| 6444-1 | 35,1 | 15,1 | 1,23 | | | | | 0,81 | |
| 6444-4 | 34,5 | 15,2 | 1,23 | | | | | 0,97 | |
| 6445-1 | 34,6 | 15,2 | 1,23 | | | | | 1,28 | |
| 6458-3 | 33,2 | 14,5 | 1,22 | | | | | | 0,42 |
| 6458-6 | 33,4 | 14,3 | 1,23 | | | | | | 0,58 |
| 7417-1 | 34,7 | 14,0 | 1,11 | | | 0,52 | | | |
| 7277-1 | 35,2 | 14,5 | 1,45 | | | | 0,61 | | |
| 7444-1 | 35,7 | 15,0 | 1,32 | | | | | 0,63 | |

## Revendications

1. Matériaux réfractaires du type alumine-zircone-silice (AZS) oxydés dont la composition est, en pourcentages massiques, 40 à 55% d'Al₂O₃, 32 à 45% de ZrO₂, 10 à moins de 16% de SiO₂ et 1 à 3% d'un oxyde de métal alcalin choisi parmi Na₂O, K₂O et leurs mélanges, ayant une microstructure comprenant essentiellement des cristaux d'alumine-alpha, des cristaux de zircone libre, des cristaux d'eutectique et une phase vitreuse intercristalline, **caractérisés en ce que**, au moins dans la zone utile des pièces, plus de 20% en nombre des cristaux de zircone libre a une morphologie dendritique, ces cristaux étant enchevêtrés entre eux et avec des cristaux d'eutectique et **en ce que** au moins 40% en nombre des cristaux de zircone libre dendritique ont une dimension supérieure à 300 µm.

2. Matériaux réfractaires selon la revendication 1, **caractérisés en ce que** sur une surface de 64 mm² de zone utile du matériau, on compte au moins 200 cristaux de zircone libre dendritique ayant une dimension supérieure à 300 µm.

3. Matériaux réfractaires selon la revendication 1 ou 2, **caractérisés en ce que** les matériaux contiennent, en pourcentages massiques, 45 à 50% d'Al₂O₃, 34 à 38% de ZrO₂, 12 à 15% de SiO₂ et 1 à 3% d'un oxyde de métal alcalin choisi parmi Ni₂O; K₂O et leurs mélanges.

4. Matériaux selon l'une quelconque des revendications 1 à 3, **caractérisés en ce que** plus de 20% des cristaux de zircone libre dendritique ont une longueur supérieure à 500 µm.

5. Matériaux selon l'une quelconque des revendications 1 à 4, **caractérisés en ce que**, sur une surface de 64 mm² de zone utile du matériau, on compte au moins 100 cristaux de zircone libre dendritique ayant une dimension supérieure à 500 *µ*m.

6. Matériaux selon l'une quelconque des revendications 1 à 5, **caractérisés en ce que** leur composition comprend, en outre, au moins l'un des oxydes optionnels suivants dans les proportions indiquées :
0,4 - 2,0% B₂O₃,
0,4 - 3,8% BaO,
0,4 - 5,0% Cr₂O₃,
0,4 - 1,3% Li₂O,
0,4 - 1,0% MgO, avec la condition que le total de ces oxydes n'excède pas 5%.

## Patentansprüche

1. Feuerfeste Oxidmaterialien des Typs Aluminiumoxid-Zirconiumoxid-Siliciumoxid (AZS) mit einer Zusammensetzung, in Massenprozent, von 40 bis 55% Al₂O₃, 32 bis 45% ZrO₂, 10 bis weniger als 16% SiO₂ und 1 bis 3% eines Alkalimetalloxids, das aus Na₂O, K₂O und ihren Gemischen ausgewählt ist, mit einer Mikrostruktur, die im Wesentlichen α-Aluminiumoxid-Kristalle, Kristalle von freiem Zirconiumoxid, eutektische Kristalle und eine interkristalline Glasphase umfassen, **dadurch gekennzeichnet, dass** wenigstens in der Nutzzone der Teile mehr als 20 Zahlenprozent der Kristalle des freien Zirconiumoxids eine dendritische Morphologie haben, wobei diese Kristalle untereinander und mit eutektischen Kristallen verschränkt sind, und dass wenigstens 40 Zahlenprozent der Kristalle des dendritischen freien Zirconiumoxids eine Größe von über 300 µm haben.

2. Feuerfeste Materialien gemäß Anspruch 1, **dadurch gekennzeichnet, dass** man auf einer Oberfläche von 64 mm² der Nutzzone des Materials wenigstens 200 Kristalle von dendritischem freiem Zirconiumoxid mit einer Größe von über 300 µm zählt.

3. Feuerfeste Materialien gemäß Anspruch 1 oder 2, **dadurch gekennzeichnet, dass** die Materialien, in Massenprozent, 45 bis 50% Al₂O₃, 34 bis 38% ZrO₂, 12 bis 15% SiO₂ und 1 bis 3% eines Alkalimetalloxids, das aus Na₂O, K₂O und ihren Gemischen ausgewählt ist, enthalten.

4. Materialien gemäß einem der Ansprüche 1 bis 3, **dadurch gekennzeichnet, dass** mehr als 20% der Kristalle des dendritischen freien Zirconiumoxids eine Länge von über 500 µm haben.

5. Materialien gemäß einem der Ansprüche 1 bis 4, **dadurch gekennzeichnet, dass** man auf einer Oberfläche von 64 mm² der Nutzzone des Materials wenigstens 100 Kristalle von dendritischem freiem Zirconiumoxid mit einer Größe von über 500 µm zählt.

6. Materialien gemäß einem der Ansprüche 1 bis 5, **dadurch gekennzeichnet, dass** ihre Zusammensetzung außerdem wenigstens eines der folgenden wahlfreien Oxide in den angegebenen Anteilen umfasst:
0,4 bis 2,0% B₂O₃;
0,4 bis 3,8% BaO
0,4 bis 5,0% Cr₂O₃;
0,4 bis 1,3% Li₂O;
0,4 bis 1,0% MgO;
mit der Maßgabe, dass der Gesamtanteil dieser Oxide 5% nicht überschreitet.

## Claims

1. Oxidized alumina-zirconia-silica (AZS) refractory materials containing 40 wt% to 55 wt% Al₂O₃, 32 wt% to 45 wt% ZrO₂, 10 wt% to less than 16 wt% SiO₂ and 1 wt% to 3 wt% of an alkali metal oxide selected from Na₂O, K₂O and mixtures thereof, having a microstructure essentially comprising alpha-alumina crystals, free zirconia crystals, eutectic crystals and an intercrystalline vitreous phase, **characterized in that**, at least in the active area thereof, more than 20% by number of said free zirconia crystals have a dendritic shape and are interleaved with each other and with eutectic crystals and **in that** at least 40% by number of said dendritic free zirconia crystals have a dimension greater than 300 µm.

2. Refractory materials according to claim 1, **characterized in that** a surface area of 64 mm² of said active area of the material contains at least 200 dendritic free zirconia crystals having a dimension greater than 300 µm.

3. Refractory materials according to claim 1 or 2, **characterized in that** the materials contain 45 wt% to 50 wt% Al₂O₃, 34 wt% to 38 wt% ZrO₂, 12 wt% to 15 wt% SiO₂ and 1 wt% to 3 wt% of an alkali metal oxide selected from Na₂O, K₂O and mixtures thereof.

4. Refractory materials according to any of claims 1 to 3, **characterized in that** more than 20% of said dendritic free zirconia crystals are longer than 500 µm.

5. Refractory materials according to any of claims 1 to 4, **characterized in that** a surface area of 64 mm² of said active area of the material contains at least 100 dendritic free zirconia crystals having a dimension greater than 500 µm.

6. Refractory materials according to any of claims 1 to 5, **characterized in that** their composition further includes at least one of the following optional oxides in the proportions indicated, and subject to the condition that the total of said oxides does not exceed 5%:
0.4 - 2.0% B₂O₃,
0.4 - 3.8% BaO,
0.4 - 5.0% Cr₂O₃,
0.4 - 1.3% Li₂O,
0.4 - 1.0% MgO.
